# EUROPÄISCHE PATENTSCHRIFT

(11) **EP 2 619 038 B1**
(45) Veröffentlichungstag und Bekanntmachung des Hinweises auf die Patenterteilung: **31.12.2014**
(21) Anmeldenummer: 11755273.7
(22) Anmeldetag: 03.09.2011
(51) Int. Cl.: B60R 11/00, B60S 1/08

(54) **FAHRZEUG MIT EINER DACHKONSOLE**
VEHICLE HAVING AN OVERHEAD CONSOLE
VÉHICULE MUNI D'UNE CONSOLE DE PLAFOND

(30) Priorität: 23.07.2011 DE 102011108392; 25.09.2010 DE 102010046612
(43) Veröffentlichungstag der Anmeldung: 31.07.2013
(73) Patentinhaber: Volkswagen Aktiengesellschaft, 38436 Wolfsburg (DE)
(72) Erfinder: HARDERS, Richard, 38448 Wolfsburg (DE); KARG, Horst-Reiner, 38442 Wolfsburg (DE)
(86) Internationale Anmeldenummer: PCT/EP2011/004449
(87) Internationale Veröffentlichungsnummer: WO 2012/038032

(56) Entgegenhaltungen:
- DE-A1- 4 329 983
- DE-A1-102007 039 251
- DE-C1- 19 647 200

## Beschreibung

Die Erfindung betrifft ein Fahrzeug mit einer Dachkonsole nach dem Oberbegriff des Patentanspruches 1.

In modernen Fahrzeugen kommt eine Vielzahl von Funktionen und Bedienkonzepten zum Einsatz. Zur Betätigung dieser Funktionen und Bedienkonzepte sind an einer bodenseitigen Mittelkonsole und/oder an einer dachhimmelseitigen Dachkonsole entsprechende Bedien- und Anzeigeelemente für den Fahrzeuginsassen vorgesehen.

Aus der DE 196 47 200 C1 ist ein gattungsgemäßes Fahrzeug mit einer solchen Dachkonsole benannt. Die Dachkonsole ist in der Fahrzeuglängsrichtung mit einer Frontscheibeneinheit nach vorne bis auf die Frontscheibe verlängert. Bei derartigen Dachmodulen ist ein optisch einwandfreier, das heißt maßgenauer Übergang von der Dachkonsole in die Frontscheibeneinheit von großer Bedeutung. Um dies zu gewährleisten, ist in der DE 196 47 200 C1 eine Abdeckkappe der Frontscheibeneinheit einerseits an einem frontscheibenseitigen Träger, das heißt an einer an der Frontscheibe angebrachten Klebeplatte, verrastet und an einer weiteren Befestigungsstelle unmittelbar an der Dachkonsole drehgelenkig befestigt. Eine maßgenaue Montage der Dachkonsole sowie der daran angelenkten Frontscheibeneinheit wird wie folgt durchgeführt: Zunächst wird die Dachkonsole zusammen mit der daran angelenkten Frontscheibeneinheit am Dachhimmel des Fahrzeuges vormontiert. Das Drehgelenk befindet sich dabei in etwa im Übergangsbereich zwischen der Frontscheibe und dem Dachhimmel. Anschließend wird sowohl die Klebeplatte als auch die Abdeckkappe der Frontscheibeneinheit um das Drehgelenk bis zur Innenseite der Frontscheibe verschwenkt und die Klebeplatte mit der Frontscheibe verklebt. Dadurch ergibt sich eine maßgenaue Fixierungsposition der Klebeplatte sowie der Abdeckkappe mit Bezug auf die Dachkonsole.

Bei der oben dargestellten Montage erfolgt die Verklebung der Klebeplatte an der Frontscheibe zu einem vergleichsweise späten Fertigungszeitpunkt, und zwar erst nachdem die Frontscheibe in den Karosserierohbau verklebt ist. Zudem muss die Dachkonsole zusammen mit der Frontscheibeneinheit als ein einteiliges Vormontageelement vorgehalten werden, bei dem die Frontscheibeneinheit und die Dachkonsole konstruktiv aufwendig mittels der oben erwähnten Gelenkverbindung miteinander bewegungsgekoppelt sind: Die Gelenkverbindung zwischen der Frontscheibeneinheit und der Dachkonsole nimmt zudem wertvollen Bauraum ein, der nicht mehr zum Verlegen elektrischer Leitungen zwischen Sensoren der Frontscheibeneinheit und der Dachkonsole nutzbar ist.

Die Aufgabe der Erfindung besteht darin, ein Fahrzeug mit einer Dachkonsole und einer Frontscheibeneinheit bereitzustellen, bei der in technisch einfacher Weise ein maßgenauer Übergang zwischen der Frontscheibeneinheit und der Dachkonsole erzielt werden kann.

Die Aufgabe ist durch die Merkmale des Patentanspruches 1 gelöst. Bevorzugte Weiterbildungen der Erfindung sind in den Unteransprüchen offenbart.

Die Erfindung beruht auf dem Grundgedanken, dass die Frontscheibeneinheit und die Dachkonsole zunächst bei der Fahrzeugmontage voneinander unabhängig verbaut werden können. Entsprechend werden zunächst Formteil- und Montagetoleranzen beim Einbau der Frontscheibeneinheit und der Dachkonsole zugelassen, wodurch sich ein aus Toleranzen resultierender Versatz zwischen der Frontscheibeneinheit und der Dachkonsole ergeben kann. Der toleranzbehaftete Versatz zwischen der Dachkonsole und der Frontscheibeneinheit wird alleine durch das Abdeckelement der Frontscheibeneinheit ausgeglichen. Hierzu ist das Abdeckelement der Frontscheibeneinheit gemäß dem kennzeichnenden Teil des Patentanspruches 1 am frontscheibenseitigen Träger nicht spielfrei befestigt, sondern vielmehr sowohl in der Fahrzeuglängsrichtung als auch in der Fahrzeugquerrichtung mit einem Bewegungsspiel schwimmend gelagert. Demgegenüber ist im Unterschied dazu das Abdeckelement für eine maßgenaue Ausrichtung mit der dachhimmelseitigen Dachkonsole an einer weiteren Befestigungsstelle spielfrei, dass heißt ortsfest, an der Dachkonsole befestigt. Auf diese Weise wird ein toleranzbedingter Seitenversatz zwischen dem fröntscheibenseitigen Träger, der in Zusammenbaulage sichtgeschützt vom Abdeckelement überdeckt ist, und der Dachkonsole zugelassen. Erfindungsgemäß kann somit der frontscheibenseitige Träger, insbesondere eine Klebeplatte, an der beispielsweise eine Multifunktionskamera und/oder andere Sensoren, etwa ein Regen-, Licht- und/oder Feuchtsensor, gehaltert ist, unabhängig von der Fahrzeugmontage vormontiert werden und kann die Klebeplatte zusammen mit der Frontscheibe in der Fahrzeugkarosserie verklebt werden. Unabhängig davon kann die Dachkonsole am Dachhimmel montiert werden. Erst nach erfolgtem Verkleben der Frontscheibe mit der Fahrzeugkarosserie erfolgt ein Toleranzausgleich durch Einbau des Abdeckelementes an der Klebeplatte und an der Dachkonsole.

Aufgrund der in der Fahrzeugquer- und -längsrichtung schwimmenden Lagerung kann das Abdeckelement auch bei einem größeren toleranzbehafteten Versatz zwischen der Dachkonsole und der Frontscheibeneinheit einen Toleranzausgleich vornehmen, ohne dass mechanische Spannungen im Abdeckelement entstehen.

Fertigungstechnisch bedingt kann ein toleranzbedingter Höhenversatz zwischen der Frontscheibeneinheit und der Dachkonsole vernachlässigt werden, so dass lediglich Toleranzen in Quer- und Längsrichtung von Relevanz sind. Die oben erwähnte schwimmende Lagerung des Abdeckelementes mit Bezug auf den frontscheibenseitigen Träger, dass heißt der Klebeplatte, beschränkt sich daher auf die Längs- und Querrichtung. Entsprechend kann an der ersten Befestigungsstelle zwischen der Abdeckplatte und dem Träger ein Höhenanschlag vorgesehen sein, auf dem sich ein Stützschenkel des Abdeckelementes in der Hochrichtung abstützt. Der Höhenanschlag kann ein horizontal ausgerichtetes Führungsprofil mit zwei übereinander liegenden Führungsschenkeln aufweisen, die einen horizontal ausgerichteten Führungsspalt definieren. In dem Führungsspalt kann der Stützschenkel des Abdeckelementes in der Hochrichtung festgelegt sein und in der Längs-/Querrichtung für den oben erwähnten Toleranzausgleich verschiebbar sein.

Im Unterschied zur ersten Befestigungsstelle zwischen dem Abdeckelement und dem Träger kann an der zweiten Befestigungsstelle zwischen dem Abdeckelement und der Dachkonsole sowohl ein Längsanschlag als auch ein Seitenanschlag vorgesehen sein. Diese bewirken eine spielfreie Positionierung des Abdeckelementes mit Bezug auf die Dachkonsole. Auf diese Weise ist bei einem toleranzbedingten Versatz zwischen der Klebeplatte beziehungsweise dem Träger und der Dachkonsole das Abdeckelement maßgenau mit der Dachkonsole ausgerichtet.

Zusätzlich zu den oben erwähnten Längs- und Seitenanschlägen kann an der zweiten Befestigungsstelle ein Sicherungselement vorgesehen sein, das das Abdeckelement gegen ein Ablösen von der Dachkonsole sichert. Das Sicherungselement kann bevorzugt ineinandergreifende Rastkonturen des Abdeckelementes und der Dachkonsole aufweisen. Alternativ kann das Sicherungselement auch ein Schraubbolzen oder dergleichen sein.

In der Frontscheibeneinheit können unterschiedliche Sensoren von Fahrerassistenzsystemen sowie andere Funktionselemente vorgesehen werden. Beispielhaft hierfür seien Regen-, Licht- und/oder Feuchtesensoren sowie eine Multifunktionskamera genannt. Alternativ oder zusätzlich dazu kann die Frontscheibeneinheit auch einen Rückspiegel tragen. Dessen Spiegelfuß kann in der frontscheibenseitigen Klebeplatte verrastet sein. Für eine stabile Halterung der Sensorelemente sowie des Rückspiegels kann es von Vorteil sein, wenn der Träger zweiteilig aus einer Kunststoff-Klebeplatte, die die leichteren Sensorelemente trägt, und einer aus Metallspritzguss hergestellten Trägerplatte für den wesentlich massiveren Rückspiegel ausgeführt ist. In beiden Fällen wird der Spiegelfuß des Rückspiegels durch eine Öffnung im Abdeckelement zur sichtgeschützt darunter angeordneten Klebeplatte geführt. Das Abdeckelement kann montagetechnisch bevorzugt zweiteilig mit einem zusätzlichen Einsatzteil aufgebaut sein. Die einander zugewandte Randkanten-Abschnitte des Abdeckelements und des Einsatzteils begrenzen die Öffnung im Abdeckelement. Bei einer derart zweigeteilten Ausführung kann der Spiegelfuß bei noch demontiertem Abdeckelement bereits in die Klebeplatte eingesetzt werden, und zwar unabhängig von seiner Querschnitts-Größe, da der Spiegelfuß bei der Montage nicht durch eine umfangsseitig geschlossene Abdeckelement-Öffnung geführt werden muss:

Das Abdeckelement kann sich in der Fahrzeuglängsrichtung ausgehend von der vorderen Stirnseite der Frontscheibeneinheit nach hinten bis zum Spiegelfuß erstrecken. Demgegenüber kann das Einsatzteil in der Fahrzeuglängsrichtung zwischen dem Spiegelfuß und der Dachkonsole angeordnet sein. Das zwischen dem Spiegelfuß und der Dachkonsole befindliche Einsatzteil kann in einer zur Dachkonsole hin offenen Ausnehmung des ersten Abdeckelementes eingesetzt sein. Dabei kann das Einsatzteil unabhängig von der Dachkonsole alleine am Abdeckelement befestigt sein, insbesondere mittels Rastelementen, die den Randbereich der Ausnehmung des ersten Abdeckelementes untergreifen können.

Bei größeren Montagetoleranzen zwischen der Dachkonsole und dem frontscheibenseitigen Träger ist der Spiegelfuß nicht mehr zentrisch durch die Abdeckelement-Öffnung geführt, wodurch sich ein ungleichmäßiges Spaltmaß zwischen dem Spiegelfuß und der Öffnung ergibt. Um ein solches ungleichmäßiges Spaltmaß auszugleichen kann ein Ausgleichsring vorgesehen sein, der den Öffnungsrand der Spiegelfuß-Öffnung umgreift und/oder in der Längs- und Querrichtung schwimmend in der Spiegelfuß-Öffnung gelagert ist.

Für die erfindungsgemäße schwimmende Lagerung zwischen dem Abdeckelement und dem frontscheibenseitigen Träger ist es von Vorteil, wenn der Träger in der Längs- und Querrichtung wesentlich kleiner dimensioniert ist, als das Abdeckelement. Dadurch ergibt sich in Längs- und Querrichtung zwischen dem frontscheibenseitigen Träger und einem seitlichen Randsteg des Abdeckelementes ein freier Spalt, dessen Spaltbreite das zum Toleranzausgleich verfügbare Bewegungsspiel definiert.

Nachfolgend ist ein Ausführungsbeispiel der Erfindung anhand der beigefügten Figuren beschrieben.

Es zeigen:
- Fig. 1: in einer Ansicht von unten einen Dachhimmel eines Fahrzeuges mit einer Dachkonsole, die durch eine Frontscheibeneinheit in der Fahrzeuglängsrichtung nach vorn verlängert ist;
- Fig. 2: in einer Ansicht von oben die Frontscheibeneinheit mit daran in der Fahrzeuglängsrichtung nach hinten anschließender Dachkonsole;
- Fig. 3: eine Schnittdarstellung entlang der Schnittebene I-I aus der Fig. 2;
- Fig. 4: eine weitere grob schematische Schnittdarstellung der schwimmenden Lagerung des Abdeckelementes;
- Fig. 5: in einer weiteren Schnittdarstellung die Befestigungsstelle zwischen dem Abdeckelement der Frontscheibeneinheit und der nach hinten anschließenden Dachkonsole;
- Fig. 6: die Befestigungsstelle zur Dachkonsole bei entfernter Dachkonsole; und
- Fig. 7: eine vereinfachte Schnittdarstellung des durch das Abdeckelement geführten Spiegelfußes.

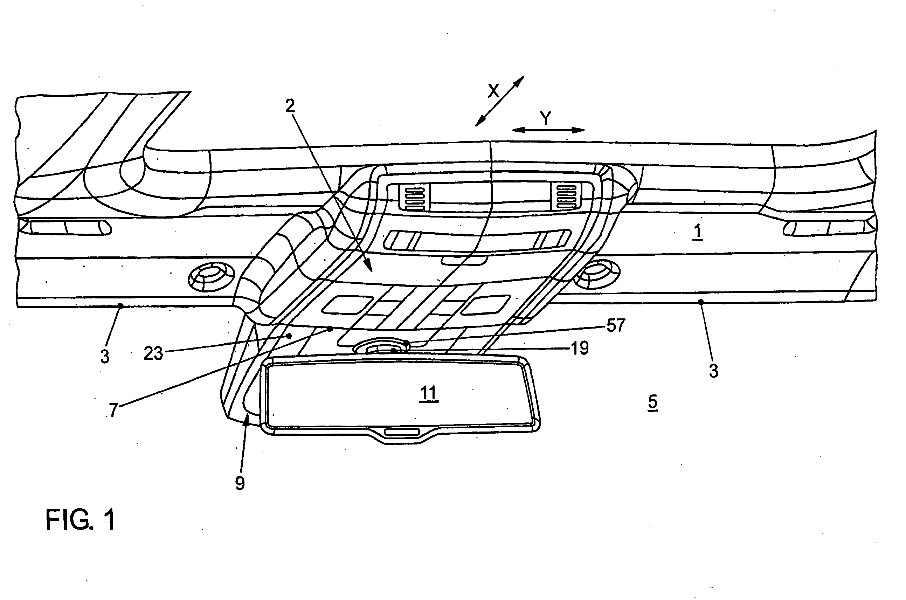

In der Fig. 1 ist der Dachhimmel 1 mit einer Dachkonsole 2 in einer Ansicht von unten ausgehend vom Fahrzeuginnenraum gezeigt. Der frontseitige Rand 3 des Dachhimmels 1 begrenzt eine angedeutete Frontscheibe 5. Wie aus der Fig. 1 weiter hervorgeht, schließt die Dachkonsole 2 in etwa bündig mit dem frontseitigen Rand 3 des Dachhimmels 1 ab. Die Dachkonsole 2 geht zudem an ihrer Vorderseite über eine schmale Verbindungsfuge 7 beziehungsweise Nullfuge flächenbündig in eine Frontscheibeheinheit 9 über. Die Frontscheibeneinheit 9 ist vollständig auf der Frontscheibe 5 gelagert, und zwar so, dass deren rückseitiger Rand in Hochrichtung z in etwa fluchtend mit dem vorderen Dachhimmelrand 3 ausgerichtet ist. Die Frontscheibeneinheit 9 ist zudem an einander zugewandten Stoßstellen im Wesentlichen fugenfrei beziehungsweise unterbrechungsfrei mit der Dachkonsole 2 verbunden und so mit dieser ausgerichtet, dass sie sowohl in der Fahrzeugquerrichtung y als auch in der Fahrzeuglängsrichtung x flächenbündig, dass heißt stufenlos ineinander maßgenau übergehen. Die Dachkonsole 2 bildet so zusammen mit der Frontscheibeneinheit 9 eine optisch geschlossene Baueinheit.

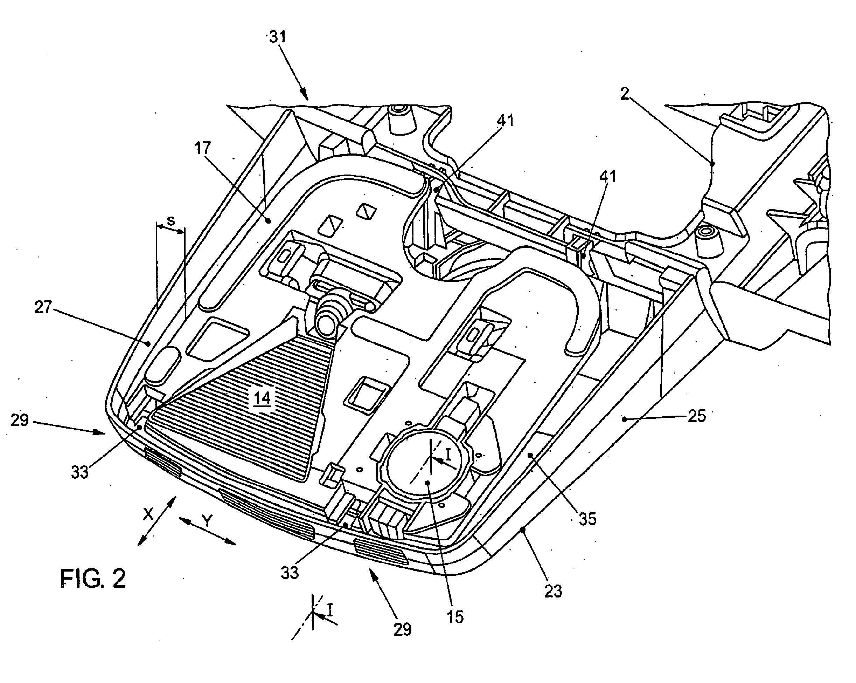

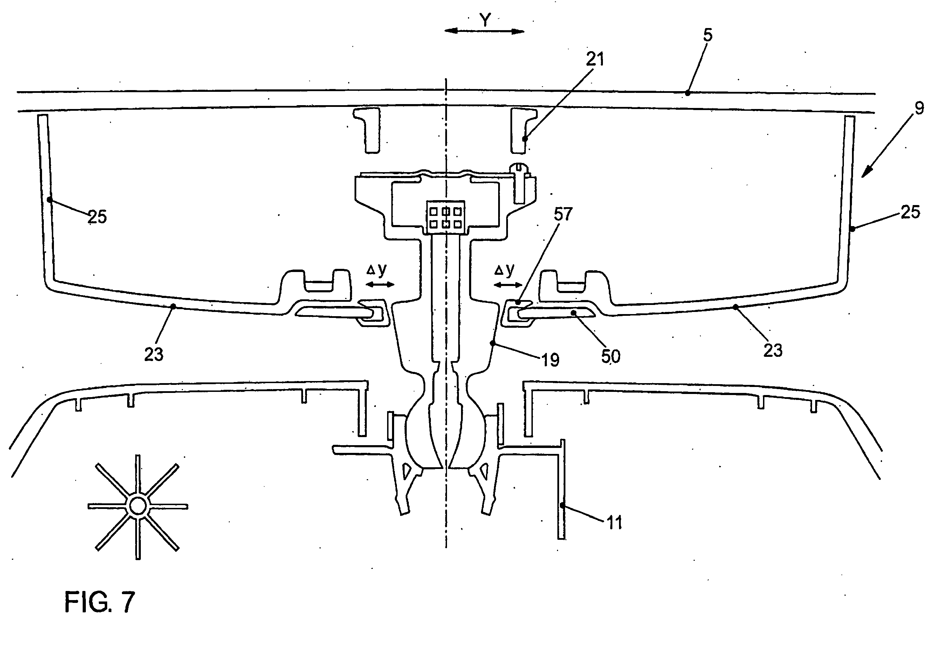

Die Frontscheibeneinheit 9 trägt den in der Fig. 1 gezeigten Rückspiegel 11 sowie gemäß der Fig. 2 eine Multifunktionskamera 13, die über eine Streulichtblende 14 in Fahrzeuglängsrichtung x nach vorne ausgerichtet ist. Seitlich neben der Streulichtblende 14 ist gemäß der Fig. 2 eine Regen-, Licht- und Feuchte-Sensoreinheit 15 vorgesehen. Die Kamera 13 sowie die Sensoreinheit 15 sind über nicht näher dargestellte Clipsverbindungen an einer Kunststoffklebeplatte 17 gehaltert, während der Rückspiegel 11 mit seinem Spiegelfuß 19 separat davon an einer weiteren Klebeplatte 21 gehaltert ist, die aus einem Metallspritzgussteil gefertigt ist. Die Klebeplatte 21 des Rückspiegels 11 ist lediglich in der Fig. 7 gezeigt. Wie aus der Fig. 2 weiter hervorgeht, sind die beiden Klebeplatten 17, 21 sowie die daran gehalterten Funktionselemente 13, 14, 15 mittels eines in etwa haubenförmigen Abdeckelementes 23 gegenüber dem Fahrzeuginnenraum sichtgeschützt überdeckt. Das haubenförmige Abdeckelement 23 weist einen randseitig nach abgewinkelten Randsteg 25 auf. Dessen Oberkante ist konturangepasst in dichter Anlage mit der Frontscheibe 5. Zudem ist der Randsteg 25 über einen freien Spalt 27 in der Quer- und Längsrichtung x, y von der Klebeplatte 17 beabstandet.

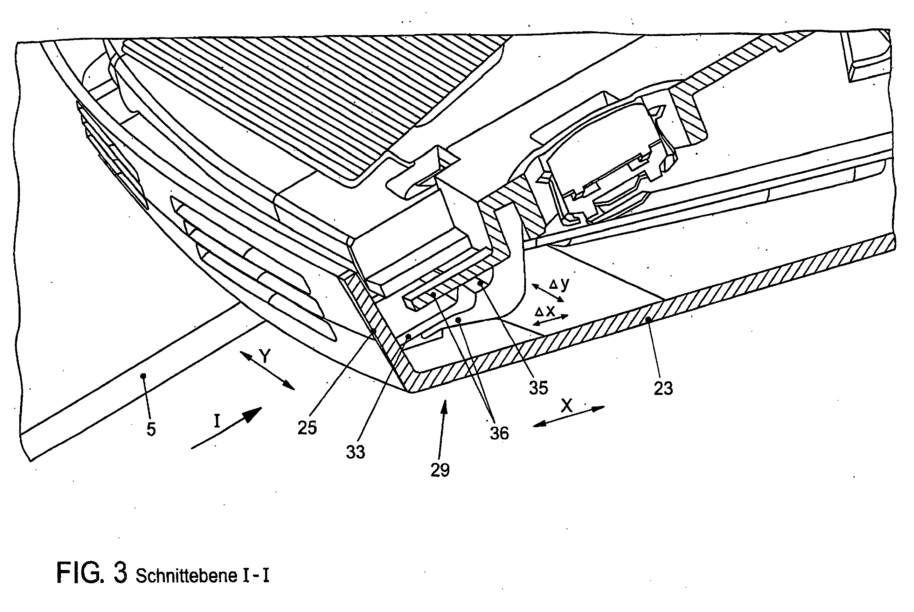

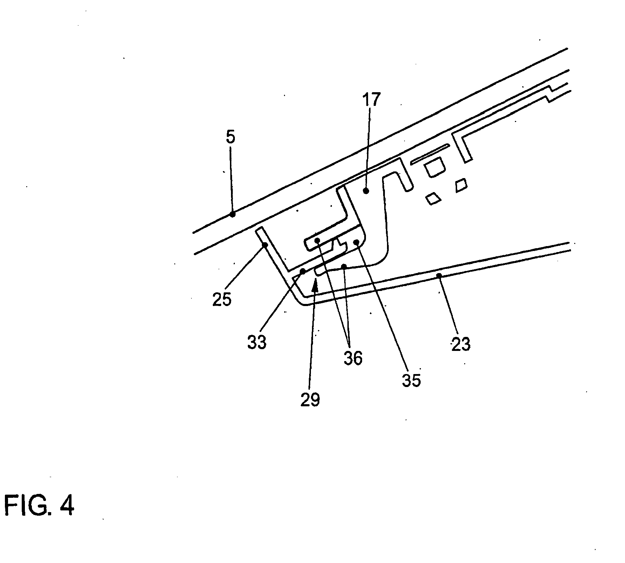

Wie aus der Fig. 2 weiter hervorgeht, ist das Abdeckelement 23 an der in Fahrzeuglängsrichtung x vorderen Stirnseite an ersten Befestigungsstellen 29 mit der Klebeplatte 17 befestigt. Zudem ist das Abdeckelement 23 rückseitig an einer zweiten Befestigungsstelle 31 an der Dachkonsole 2 befestigt. In der Fig. 3 ist in einer Schnittansicht entlang der Schnittebene I-I aus der Fig. 2 eine der ersten Befestigungsstellen 29 gezeigt. Demzufolge ragt an der Innenseite des Randsteges 25 des Abdeckelementes 23 in etwa horizontal ein Stützschenkel 33 ab, der in der Fahrzeuglängsrichtung x und in der Fahrzeugquerrichtung y in einem Führungsspalt 35 verschiebbar geführt ist. Der Führungsspalt 35 ist durch ein an der Klebeplatte 17 angespritztes Kunststoffprofil mit zwei übereinanderliegenden Führungsschenkeln 36 definiert. Das U-Profil der Klebeplatte 17 ist so bemessen, dass das Abdeckelement 23 in der Fahrzeuglängsrichtung sowie in der Fahrzeugquerrichtung y über Bewegungsspiele Δx, Δy schwimmend gelagert ist. Das hierbei verfügbare Bewegungsspiel Δx, Δy ist durch die Spaltbreite s (Fig. 2) des oben erwähnten Spalts 27 zwischen der Klebeplatte 17 und dem Randsteg 25 des Abdeckelementes 23 definiert. In der Fig. 4 ist in einer schematischen Seitenschnittdarstellung ebenfalls die schwimmende Lagerung des Abdeckelementes 23 an der ersten Befestigungsstelle 29 dargestellt.

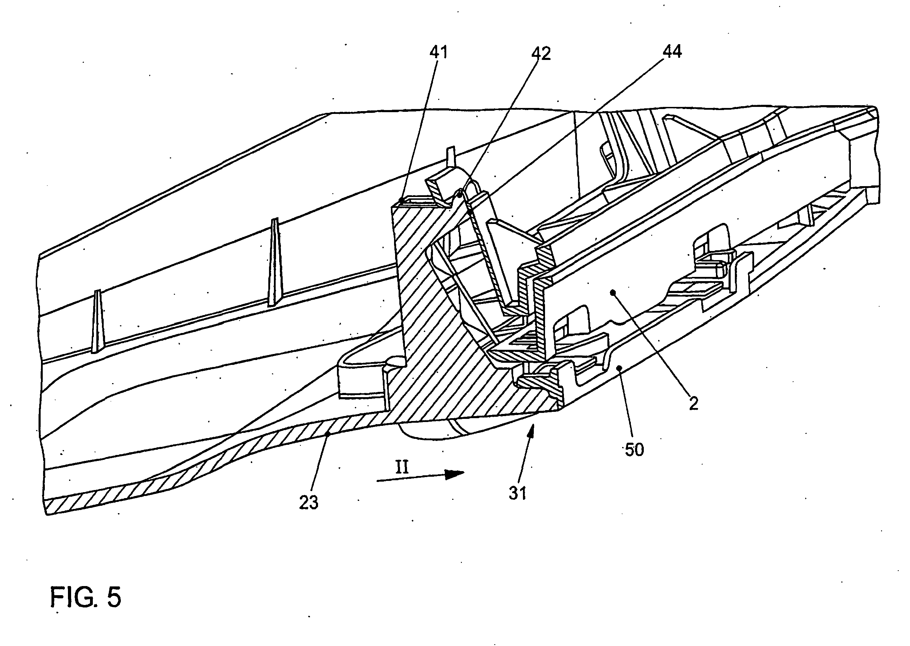

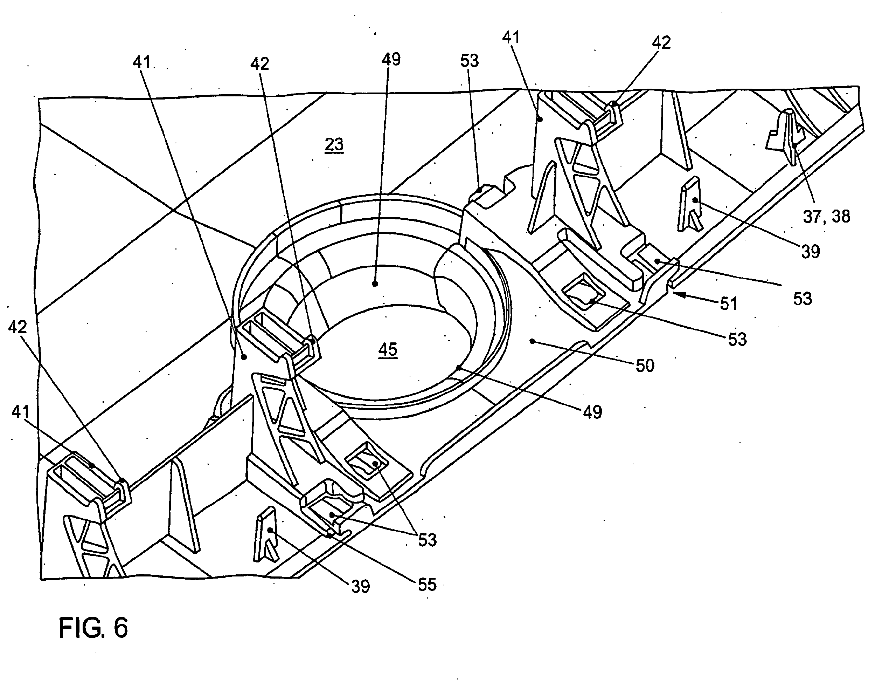

In der Fig. 5 ist im Unterschied zu den Fig. 3 und 5 die zweite Befestigungsstelle 31 in vergrößerter Schnittdarstellung gezeigt. In der zweiten Befestigungsstelle 31 ist das Abdeckelement 23 der Frontscheibeneinheit 9 für eine maßgenaue Ausrichtung mit der Dachkonsole 2 spielfrei, das heißt ohne Bewegungsspiel ortsfest gegenüber der Dachkonsole 2 positioniert. Hierzu sind als Positionierhilfen gemäß der Fig. 5 und 6 eine Reihe von Längs- und Seitenanschlägen 37, 38 sowie Höhenanschläge 39 vorgesehen, mit deren Hilfe das Abdeckelement 23 gegenüber der Dachkonsole 2 spielfrei positionierbar ist. Zusätzlich sind an dem Abdeckelement 23 gemäß der Fig. 5 und 6 Rastelemente 41 angeformt, deren nach oben weisende Rasthaken 42 in korrespondierende Rastausnehmungen 44 der Dachkonsole 2 ragen. In der Fig. 6 ist die zweite Befestigungsstelle 31 bei losgelöster Dachkonsole 2 gezeigt, an deren Randbereich die Rastelemente 41 sowie die Bewegungsanschläge 37 bis 39 randseitig angeformt sind. Zudem ist in der Fig. 6 eine Spiegelfuß-Öffnung 45 gezeigt, durch die in der Zusammenbaulage der Spiegelfuß 19 des Rückspiegels 11 geführt ist. Gemäß der Fig. 6 ist die Spiegelfuß-Öffnung 45 durch einander zugewandte Randkanten-Abschnitte 47, 49 des Abdeckelementes 23 sowie eines Einsatzteils 50 definiert. Das Einsatzteil 50 ist gemäß der Fig. 6 in der Einbaulage flächenbündig in eine zentrale rechteckförmige Ausnehmung 51 des ersten Abdeckelementes 23 eingesetzt, die in Richtung auf die dahinter angeordnete Dachkonsole 2 offen gestaltet ist. Das Einsatzteil 50 untergreift dabei mit Rastelementen 53 eine korrespondierende Gegenkontur 55 an der Unterseite des Abdeckelementes 23.

In der Fig. 7 ist gemäß einer Abhandlung die Frontscheibeneinheit 9 in einer schematischen Seitenschnittdarstellung gezeigt. Demzufolge ist der Spiegelfuß 19 wie bereits erwähnt an der Klebeplatte 21 verrastet und die eine Spiegelfuß-Öffnung 45 des Abdeckelementes 23 geführt. Die Spiegelfuß-Öffnung 45 ist in der Fig. 7 durch einen Ausgleichsring 57 definiert. Dieser umgreift die Randkanten-Abschnitte 47, 49 des Abdeckelements 23 und des Einsatzteils 50 und ist in der Längs- und Querrichtung x, y schwimmend gelagert. Mit dem derart gleitend gelagerten Ausgleichsring 57 können daher ansonsten einfach ersichtliche ungleichmäßige Spaltmaße zwischen dem Spiegelfuß 19 und der Spiegelfuß-Öffnung 45 ausgeglichen werden.

Nachfolgend wird der Zusammenbau der Dachkonsole 2 mit der Frontscheibeneinheit 9 beschrieben. Zunächst werden in einem Vormontageschritt die Klebeplatten 17, 21 auf die dem Fahrzeuginnenraum zugewandte Unterseite der Frontscheibe 5 geklebt. Unabhängig davon wird die Dachkonsole 2 mit dem Dachhimmel 1 verschraubt. Anschließend wird die Frontscheibe 5 mit den daran bereits befestigten Klebeplatten 17, 21 in den Frontscheiben-Rahmen der Fahrzeugkarosserie verklebt. In einem folgenden Bestückungsschritt werden anschließend der Spiegelfuß 19 des Rückspiegels 11, die Multifunktionskamera 13 sowie die Sensoreinheit 15 mit den Klebeplatten 17, 21 verrastet. In einem weiteren Montageschritt wird dann in der, in der Fig. 1 gezeigten Montagerichtung I das erste Abdeckelement 23 in der Fahrzeugrichtung nach hinten auf die erste Befestigungsstelle 29 geschoben, wodurch sich eine in der x- und in der y-Richtung schwimmende Lagerung mit den Bewegungsspielen Δx, Δy ergibt. Danach kann gegebenenfalls eine montagebedingte Maßtoleranz zwischen den Klebeplatten 17, 21 und der Dachkonsole 2 durch entsprechendes Verstellen der schwimmend gelagerten Abdeckplatte 23 ausgeglichen werden. Darauffolgend wird die Abdeckplatte 23 an der zweiten Befestigungsstelle 31 mit der Dachkonsole 2 positionsgenau verrastet, und zwar in der, in den Fig. 1 bis 3 gezeigten Montagerichtung II, die mit der Montagerichtung I übereinstimmt.

### Bezugszeichenliste

- 1: Dachhimmel
- 2: Dachkonsole
- 3: vorderer Dachhimmel-Rand
- 5: Frontscheibe
- 7: Verbindungsfuge
- 9: Frontscheibeneinheit
- 11: Rückspiegel
- 13: Multifunktionskamera
- 14: Streulichtblende
- 15: Regen-, Licht-, und Feuchtesensor
- 17, 21: Träger
- 19: Spiegelfuß
- 23: Abdeckelement
- 25: Randsteg
- 27: Spalt
- 29: erste Befestigungsstelle
- 31: zweite Befestigungsstelle
- 33: Stützschenkel
- 35: Spalt
- 36: Führungsschenkel
- 37, 38, 39: Bewegungsanschläge
- 41: Rastelemente
- 42: Rasthaken
- 44: Rastausnehmungen
- 45: Spiegelfuß-Öffnung
- 47, 49: Randkanten
- 50: Einsatzteil
- 51: Ausnehmung
- 53: Rastelemente
- 55: Gegenkontur
- 57: Ausgleichsring
- s: Spaltbreite
- I, II: Montagerichtungen
- x, y, z: Raumrichtungen
- Δx, Δy: Bewegungsspiel

## Patentansprüche

1. Fahrzeug mit einem frontseitig durch eine Frontscheibe (5) begrenzten Dachhimmel (1), der eine Dachkonsole (2) aufweist, die mit einer Frontscheibeneinheit (9) in der Fahrzeuglängsrichtung (x) nach vorne verlängert ist, deren Abdeckelement (23) an zumindest einer ersten Befestigungsstelle (29) an einem frontscheibenseitigen Träger (17) und an zumindest einer zweiten Befestigungsstelle (31) an der Dachkonsole (2) befestigt ist, **dadurch gekennzeichnet, dass** die Frontscheibeneinheit (9) und die Dachkonsole (2) zunächst bei der Fahrzeugmontage voneinander unabhängig verbaubar sind, und zwar mit einem aus Formteil- und Montagetoleranzen resultierenden Versatz zwischen der Frontscheibeneinheit (9) und der Dachkonsole (2), wobei zum Ausgleich des toleranzbehafteten Versatzes zwischen der Dachkonsole (2) und der Frontscheibeneinheit (9) das Abdeckelement (23) an der ersten Befestigungsstelle (29) in der Fahrzeuglängsrichtung (x) und in der Fahrzeugquerrichtung (y) mit einem Bewegungsspiel (Δx, Δy) schwimmend gelagert ist, und an der zweiten Befestigungsstelle (31) für eine maßgenaue Ausrichtung mit der Dachkonsole (2) spielfrei gelagert ist.

2. Fahrzeug nach Anspruch 1, **dadurch gekennzeichnet, dass** der Träger (17) an der ersten Befestigungsstelle (29) einen Höhenanschlag (36) aufweist, an dem ein Stützschenkel (33) des Abdeckelements (23) in der Hochrichtung (z) abgestützt ist.

3. Fahrzeug nach Anspruch 2, **dadurch gekennzeichnet, dass** der Höhenanschlag (36) an der ersten Befestigungsstelle (29) des Trägers (17) einen Führungsspalt (35) aufweist, in dem der Stützschenkel (33) in Hochrichtung (z) festgelegt ist und in den Längs- und Querrichtungen (x, y) verschiebbar ist.

4. Fahrzeug nach Anspruch 1, 2 oder 3, **dadurch gekennzeichnet, dass** die Dachkonsole (2) an der zweiten Befestigungsstelle (31) Längs- und Seitenanschläge aufweist, die das Abdeckelement (23) in der Längs- und Seitenrichtung (x, y) spielfrei positionieren.

5. Fahrzeug nach einem der vorhergehenden Ansprüche, **dadurch gekennzeichnet, dass** an der zweiten Befestigungsstelle (31) zumindest ein Sicherungselement (41) vorgesehen ist, das das Abdeckelement (23) gegen ein Ablösen von der Dachkonsole (2) sichert, insbesondere ineinander greifende Rastkonturen des Abdeckelements (23) und der Dachkonsole (2).

6. Fahrzeug nach einem der vorhergehenden Ansprüche, **dadurch gekennzeichnet, dass** am frontscheibenseitigen Träger (17, 21) ein Rückspiegel (11) gehaltert ist, dessen Spiegelfuß (19) durch eine Öffnung (45) im Abdeckelement (23) geführt ist, und/oder welche Öffnung (45) durch Randkanten-Abschnitte (47, 49) des Abdeckelements (23) eines Einsatzteils (50) begrenzt ist.

7. Fahrzeug nach Anspruch 6, **dadurch gekennzeichnet, dass** sich das Abdeckelement (23) in der Fahrzeuglängsrichtung (x) nach hinten bis zum Spiegelfuß (19) erstreckt, und/oder das Einsatzteil (50) in der Fahrzeuglängsrichtung (x) zwischen dem Spiegelfuß (19) und der Dachkonsole (2) angeordnet ist.

8. Fahrzeug nach einem der vorhergehenden Ansprüche, **dadurch gekennzeichnet, dass** das Abdeckelement (23) einen Ausgleichsring (57) aufweist, der den Öffnungsrand der im Abdeckelement (23) gebildeten Spiegelfuß-Öffnung (45) umgreift und/oder in Längs- und Querrichtung (x, y) schwimmend gelagert ist.

9. Fahrzeug nach einem der vorhergehenden Ansprüche, **dadurch gekennzeichnet, dass** das Abdeckelement (23) mit einem seitlichen Randsteg (25) den frontscheibenseitigen Träger (17) mit einem freien Spalt (35) seitlich umfasst, dessen Spaltbreite (s) das verfügbare Bewegungsspiel (Δx, Δy) des Abdeckelements (23) definiert.

10. Fahrzeug nach einem der Ansprüche 6 bis 9, **dadurch gekennzeichnet, dass** das Einsatzteil (50) in eine, insbesondere in Richtung auf die Dachkonsole (2) offene Ausnehmung (51) des ersten Abdeckelements (23) einsetzbar, und/oder das Einsatzteil (50) unabhängig von der Dachkonsole (2) ausschließlich an dem ersten Abdeckelement (23) befestigbar ist.

## Claims

1. Vehicle with a roof liner (1) bounded on the front side by a windscreen (5), the vehicle having an overhead console (2) which is extended forwards in the longitudinal direction (x) of the vehicle by a windscreen unit (9) and the covering element (23) of which is fastened at at least one first fastening point (29) to a windscreen-side support (17) and at at least one second fastening point (31) to the overhead console (2), **characterized in that** the windscreen unit (9) and the overhead console (2) can first of all be installed independently of each other during the assembly of the vehicle, specifically with an offset, which results from shaped part tolerances and assembly tolerances, between the windscreen unit (9) and the overhead console (2), wherein, in order to compensate for the tolerance-afflicted offset between the overhead console (2) and the windscreen unit (9), the covering element (23) is mounted in a floating manner at the first fastening point (29) with a movement clearance (Δx, Δy) in the longitudinal direction (x) of the vehicle and in the transverse direction (y) of the vehicle, and is mounted without a clearance at the second fastening point (31) for dimensionally precise alignment with the overhead console (2).

2. Vehicle according to Claim 1, **characterized in that** the support (17) at the first fastening point (29) has a height stop (36) on which a supporting limb (33) of the covering element (23) is supported in the vertical direction (z).

3. Vehicle according to Claim 2, **characterized in that** the height stop (36) at the first fastening point (29) of the support (17) has a guide gap (35) in which the supporting limb (33) is fixed in the vertical direction (z) and is displaceable in the longitudinal and transverse directions (x, y).

4. Vehicle according to Claim 1, 2 or 3, **characterized in that** the overhead console (2) has at the second fastening point (31) longitudinal and side stops which position the covering element (23) without a clearance in the longitudinal and lateral direction (x, y).

5. Vehicle according to one of the preceding claims, **characterized in that** at least one securing element (41) is provided at the second fastening point (31), said securing element securing the covering element (23) against becoming detached from the overhead console (2), in particular intermeshing latching contours of the covering element (23) and the overhead console (2).

6. Vehicle according to one of the preceding claims, **characterized in that** a rear view mirror (11) is secured on the windscreen-side support (17, 21), the mirror foot (19) of which rear view mirror is guided through an opening (45) in the covering element (23), and/or which opening (45) is bounded by border edge sections (47, 49) of the covering element (23) of an insert (50).

7. Vehicle according to Claim 6, **characterized in that** the covering element (23) extends rearwards in the longitudinal direction (x) of the vehicle as far as the mirror foot (19), and/or the insert (50) is arranged in the longitudinal direction (x) of the vehicle between the mirror foot (19) and the overhead console (2).

8. Vehicle according to one of the preceding claims, **characterized in that** the covering element (23) has a compensating ring (57) which engages around the opening border of the mirror-foot opening (45) formed in the covering element (23), and/or is mounted in a floating manner in the longitudinal and transverse direction (x, y).

9. Vehicle according to one of the preceding claims, **characterized in that** the covering element (23) laterally surrounds the windscreen-side support (17) by a lateral border web (25) with a free gap (35), the gap width (s) of which defines the available movement clearance (Δx, Δy) of the covering element (23).

10. Vehicle according to one of Claims 6 to 9, **characterized in that** the insert (50) is insertable into a recess (51) of the first covering element (23), which recess is open in particular in the direction of the overhead console (2), and/or the insert (50) is fastenable exclusively to the first covering element (23) independently of the overhead console (2).

## Revendications

1. Véhicule comprenant un habillage de plafond (1) délimité du côté avant par une vitre avant (5), lequel comprend une console de toit (2) qui est prolongée vers l'avant dans la direction longitudinale du véhicule (x) par une unité de vitre avant (9), dont l'élément de recouvrement (23) est fixé, en au moins un premier point de fixation (29), à un support situé du côté de la vitre avant (17) et, en au moins un deuxième point de fixation (31), à la console de toit (2), **caractérisé en ce que** l'unité de vitre avant (9) et la console de toit (2) peuvent être installées indépendamment l'une de l'autre tout d'abord lors du montage du véhicule, et ce avec un décalage entre l'unité de vitre avant (9) et la console de toit (2) résultant de tolérances de pièces moulées et de montage et, pour compenser le décalage présentant des tolérances entre la console de toit (2) et l'unité de vitre avant (9), l'élément de recouvrement (23) étant monté flottant avec un jeu de déplacement (Δx, Δy) au premier point de fixation (29) dans la direction longitudinale du véhicule (x) et dans la direction transversale du véhicule (y), et étant monté sans jeu au deuxième point de fixation (31) pour un alignement dimensionnellement précis avec la console de toit (2) .

2. Véhicule selon la revendication 1, **caractérisé en ce que** le support (17) comprend une butée en hauteur (36) au premier point de fixation (29), sur laquelle est supportée une branche de support (33) de l'élément de recouvrement (23) dans la direction verticale (z).

3. Véhicule selon la revendication 2, **caractérisé en ce que** la butée en hauteur (36) au premier point de fixation (29) du support (17) présente un interstice de guidage (35) dans lequel la branche de support (33) est fixée dans la direction verticale (z) et peut être déplacée dans les directions longitudinale et transversale (x, y).

4. Véhicule selon la revendication 1, 2 ou 3, **caractérisé en ce que** la console de toit (2) présente au deuxième point de fixation (31) des butées longitudinale et latérale qui positionnent sans jeu l'élément de recouvrement (23) dans les directions longitudinale et latérale (x, y).

5. Véhicule selon l'une quelconque des revendications précédentes, **caractérisé en ce qu'**au moins un élément de blocage (41) est prévu au deuxième point de fixation (31), lequel élément de blocage bloque l'élément de recouvrement (23) de manière à l'empêcher de se détacher de la console de toit (2), en particulier des contours d'encliquetage venant en prise l'un dans l'autre de l'élément de recouvrement (23) et de la console de toit (2).

6. Véhicule selon l'une quelconque des revendications précédentes, **caractérisé en ce qu'**un rétroviseur (11) est maintenu sur le support situé du côté de la vitre avant (17, 21), dont la branche de rétroviseur (19) est guidée à travers une ouverture (45) dans l'élément de recouvrement (23), et/ou laquelle ouverture (45) est délimitée par des portions de bord périphérique (47, 49) de l'élément de recouvrement (23) d'une pièce d'insertion (50).

7. Véhicule selon la revendication 6, **caractérisé en ce que** l'élément de recouvrement (23) s'étend vers l'arrière dans la direction longitudinale du véhicule (x) jusqu'à la branche de rétroviseur (19), et/ou la pièce d'insertion (50) est disposée entre la branche de rétroviseur (19) et la console de toit (2) dans la direction longitudinale du véhicule (x).

8. Véhicule selon l'une quelconque des revendications précédentes, **caractérisé en ce que** l'élément de recouvrement (23) comprend une bague de compensation (57) qui vient en prise autour du bord d'ouverture de l'ouverture de branche de rétroviseur (45) formée dans l'élément de recouvrement (23) et/ou est montée flottante dans les directions longitudinale et transversale (x, y).

9. Véhicule selon l'une quelconque des revendications précédentes, **caractérisé en ce que** l'élément de recouvrement (23) entoure latéralement, par une nervure périphérique latérale (25), le support situé du côté de la vitre avant (17) avec un interstice libre (35) dont la largeur d'interstice (s) définit le jeu de déplacement disponible (Δx, Δy) de l'élément de recouvrement (23).

10. Véhicule selon l'une quelconque des revendications 6 à 9, **caractérisé en ce que** la pièce d'insertion (50) peut être insérée dans un évidement (51), en particulier ouvert en direction de la console de toit (2), du premier élément de recouvrement (23), et/ou la pièce d'insertion (50) peut être fixée exclusivement au premier élément de recouvrement (23), indépendamment de la console de toit (2).
